Europäisches Patentamt

European Patent Office

Office européen des brevets

(11) Publication number: **0 336 997 B1**

(12) ## EUROPEAN PATENT SPECIFICATION

(45) Date of publication of patent specification: **04.03.92**  (51) Int. Cl.⁵: **C01B 21/064**

(21) Application number: **88106067.7**

(22) Date of filing: **15.04.88**

(54) **Process for producing boron nitride.**

(43) Date of publication of application:
**18.10.89 Bulletin 89/42**

(45) Publication of the grant of the patent:
**04.03.92 Bulletin 92/10**

(84) Designated Contracting States:
**DE FR GB**

(56) References cited:
**EP-A- 0 137 652**       **GB-A- 1 249 434**
**US-A- 3 120 998**       **US-A- 3 241 918**
**US-A- 3 241 919**       **US-A- 4 749 556**

**PATENT ABSTRACTS OF JAPAN vol. 11, no.
300 (C-449) (2747) 29th September 1987**

(73) Proprietor: **UNION CARBIDE CORPORATION**
**39 Old Ridgebury Road**
**Danbury Connecticut 06817(US)**

(72) Inventor: **Parrish, Lien Nguyen**
**7568 Briarcliff Parkway**
**Middleburg Heights (44130) Ohio(US)**
Inventor: **Chase, Charles Clifford**
**13535 Pleasant Valley Road**
**Middleburg Heights (44130) Ohio(US)**

(74) Representative: **Gore, Peter Manson et al**
**W.P. THOMPSON & CO. Coopers Building**
**Church Street**
**Liverpool L1 3AB(GB)**

**Description**

This invention relates to a process for producing boron nitride using boron oxide as a reactant material and more particularly to a continuous process for producing boron nitride from boron oxide.

Boron nitride is a thermally stable, highly refractory material of increasing commercial significance. Typically, boron nitride is produced by processes wherein boric acid is utilized as the boron source of reaction compositions. Suggested processes for producing boron nitride from boric acid are described in US-A- 2 922 699; US-A- 3 241 918; and US-A 3 261 667 as well as in GB-A- 874 166; GB-A- 874 165; and GB-A- 1 241 206.

Processes wherein boron nitride is generated from boron oxide, as opposed to boric acid, are of special interest since per unit weight of reactant materials boron oxide contains more boron than boric acid, the additional boron theoretically making higher product yields of boron nitride possible. However, processes wherein boron oxide is a reactant are generally complicated, cumbersome procedures. For example, US-A- 3 208 824 discloses a process for producing boron nitride using as a boron source compounds such as $B_2O_3$, $H_3BO_3$, and alkali and alkaline earth metal borates. The process involves mixing a selected boron-containing compound and an inert solid diluent with water to form a pasty mass, extruding the pasty mass into small particles, drying the particles at a sufficiently high temperature to vaporize the water, and nitriding the dried particles with ammonia.

US-A- 3 232 706 discloses a process wherein boron oxide is introduced into the high temperature reaction zone of an arc furnace, vaporized and reacted with a reactive nitrogenous gas such as ammonia to produce boron nitride. The process requires the use of a specialized high temperature furnace wherein a high temperature reaction zone is produced by utilizing one or more non-consumable electrodes to generate a high temperature arc.

US-A- 3 429 722 discloses a process for producing boron nitride fibers wherein a boron oxide fiber having a maximum diameter of about 30 $\mu$m is heated at a temperature rise between 25 $^\circ$C per hour and 5,000 $^\circ$C per hour up to a final temperature between 300 $^\circ$C and 1500 $^\circ$C in a current of ammonia. US-A- 3 429 722 discloses that particle size is critical to obtaining substantially complete conversion of $B_2O_3$ to boron nitride (column 2, line 72 to column 3, line 11). US-A- 3 429 722 further discloses that by heating the oxide in ammonia, the boron oxide fiber is provided with a protective shield of a nitrogen and hydrogen containing compound which retains the fibrous form of the $B_2O_3$ reactant and prevents fusion of the fiber.

US-A- 4 130 631 discloses a process for forming a shaped article of fused boron nitride fibers which comprises forming a shaped article from a blend of boron oxide fibers and boric acid, heating the article in an anhydrous gas to a temperature above the melting temperature of the boric acid for a time sufficient to melt some of the boric acid to the boron oxide fibers and, either simultaneously with or subsequent thereto, heating the article in an ammonia atmosphere to convert the boron oxide and boric acid to boron nitride. US-A- 4 130 631 requires that the article be heated in such a manner that the boron oxide fibers are not destroyed by melting or decomposition.

It is further known that boron oxide may be reacted with ammonia in the presence of a tertiary calcium phosphate carrier at temperatures of about 900 $^\circ$C to produce boron nitride. (See Gmelin's Handbuch der anorganischen Chemie, supplement to 8th edition, vol. 13, part 1, pages 1-6 (Springer Verlag, 1974) as cited US-A-4,107,276) In this process the tertiary calcium phosphate carrier distributes the boron oxide in a thin sheet, providing a larger surface for oxide reaction with ammonia thereby reducing the tendency of boron oxide to form large unreactive lumps or agglomerations. However, such a reaction requires the use of extremely pure reactants and employs various heating, drying, homogenation and filtration steps.

GB-A- 1 249 434 discloses a process for directly producing the hexagonal crystalline form of boron nitride which comprises mixing an oxygen-containing boron compound (which is boric acid or boric oxide or a compound which forms boric oxide under the conditions of the reaction) with an organic nitrogen-containing compound. It is necessary to dry the resulting mixture at a temperature from 110 to 350 $^\circ$C. The dried mixture is then heated in a non-oxidizing atmosphere at a temperature between 1000 and 1600 $^\circ$C. Such heating must be either in the presence of an alkaline earth metal nitride as catalyst or in a reaction vessel whose inner wall and/or base is covered with a layer of preformed hexagonal boron nitride. The mixture must be kept at a temperature between 1000 and 1600 $^\circ$ for a period of from 5 to 90 minutes, the reaction mixture then being cooled, the cold reaction product size-reduced, treated with water, filtered off and dried so as to isolate hexagonal boron nitride.

In general, the above described processes are time-consuming, multi-step procedures, which produce commercially unattractive yields of boron nitride, require the use of boron oxide in fibrous form or utilize highly specialized equipment. Moreover, the processes typically require the use of an ammonia nitriding atmosphere, which for environmental and toxicological reasons is oftentimes objectionable.

2

EP 0 336 997 B1

One aspect of this invention is to provide a simplified, high-yield process for producing boron nitride directly from particulate boron oxide. One other aspect is to produce boron nitride by a process wherein nitrogen may be substituted for ammonia as a nitriding agent.

According to the present invention there is provided a process for the production of boron nitride which comprises heating a reaction composition comprising boron oxide, a puffing agent, and a nitrogen-containing nitride promoter under a non-oxidizing atmosphere and maintaining same at elevated temperature to form boron nitride, the puffing agent being selected from water, metaboric acid, orthoboric acid, pyroboric acid, ammonium pentaborate tetrahydrate and mixtures thereof.

In the process according to the present invention the non-oxidizing atmosphere preferably is a nitrogenous atmosphere of ammonia or, most preferably, nitrogen; the temperature is maintained at sufficiently elevated temperature, preferably 700°C to 1200°C, most preferably 900° to 1050°C, to form boron nitride.

The process of the present invention provides a method of producing high purity boron nitride from particulate boron oxide in relatively high yields. Further, this invention eliminates the need for time consuming reactant drying steps, and is adaptable to the continuous production of boron nitride.

For purposes of this invention an admixture of boron oxide and boric acid may be produced by heating boron oxide in the presence of at least one puffing agent capable of reacting with said boron oxide when heated to expand same, producing thereby a porous substrate comprising an homogenous mixture of boron oxide and metaboric acid. In the practice of this invention a nitrogen containing nitride promoter is combined with boron oxide and at least one puffing agent to provide a reaction composition which is thereafter heated as previously described to produce boron nitride.

Puffing agents include water, metaboric acid, orthoboric acid, pyroboric acid, ammonium pentaborate tetrahydrate and mixtures thereof. When water is used as a puffing agent it should be combined with the other reactants in a manner such as to avoid agglomeration of the reactant materials; e.g. spraying water onto a mixture of boron oxide and a nitride promoter. Preferred puffing agents are compounds such as metaboric acid, orthoboric acid, pyroboric acid and ammonium pentaborate tetrahydrate which increase the overall efficiency of the process by providing the reaction composition with additional boron beyond that which is provided thereto by the boron oxide reactant. For purposes of this invention, orthoboric acid and ammonium pentaborate tetrahydrate are particularly preferred puffing agents.

Boron oxide particles having a broad range of sizes are suitable for use herein. In order to sufficiently increase the surface area of the oxide available for reaction it is generally desirable to employ particles less than about $30\mu$m in diameter, preferably about $10\mu$m in effective diameter.

Nitrogen-containing nitride promoters contemplated for use herein include organic primary, secondary and tertiary amines, including compounds such as diphenylamine, ethylene amine, hexamethylene amine, and melamine; and organic amides such as dicyandiamide. Preferred amines are those compounds which under reaction conditions undergo polymerization to form straight chain linkages thereby optimizing the nitrogen sites available for reaction. It should be noted that under the conditions described herein, melamine typically forms a volatile polymerization by-product which tends to collect on furnace walls necessitating periodic system clean-out. Dicyandiamide does not form such a by-product and is, therefore, particularly preferred as a promoter.

The reaction compositions of this invention are subject to wide variation. In general, compositions suitable for use herein comprise from about 30 to about 55 weight percent, based upon the total weight of the reactant materials, of promoter and from about 45 to about 70 weight percent, based upon the total weight of the reactant materials, of a combination of boron oxide and puffing agent wherein the weight ratio of boron oxide to puffing agent in the combination ranges from about 4:1 to about 1:3. At concentrations above about 55 weight percent, based upon the total weight of reactant materials, nitride promoters can produce undesirably high quantities of carbon, resulting in a product of less than desirable purity. At promoter concentrations below about 40 weight percent, based upon the total weight of reactant materials, nitride production can be significantly reduced. Similarly, when a puffing agent is present in a composition in greater quantities than are suggested by the above recited weight percent and oxide to puffing agent weight ratio ranges, nitride yields can be reduced. Conversely, if the puffing agent is present in a composition in lower quantities than are suggested by the above recited weight percent and weight ratio ranges, incomplete reaction can occur as a result of the formation of a glassy boron oxide/boron nitride composite.

Preferred composition ranges depend upon the reactant components selected. When melamine, boron oxide, and boric acid are the components, particularly good product yields are obtained from a reaction composition comprising from about 45 to about 50 weight percent, based on the total weight of the reaction composition, of melamine and from about 50 to about 55 weight percent, based on the total weight of the

3

EP 0 336 997 B1

reaction composition, of a combination of boron oxide and orthoboric acid, wherein the weight ratio of boron oxide to orthoboric acid ranges from about 3:1 to about 4:1, preferably from about 3.2:1.0 to about 3.6:1.0. In contrast thereto, when dicyandiamide, boron oxide and orthoboric acid are the components, particularly good product yields are obtained from a reaction composition comprising from about 35 to about 40 weight percent, based on the total weight of the reaction composition, of dicyandiamide and from about 60 to about 65 weight percent, based on the total weight of the reaction composition, of a combination of boron oxide and orthoboric acid, wherein the weight ratio of boron oxide to orthoboric acid ranges from about 2:1 to about 1:1, preferably from about 1.4:1.0 to about 1.0:1.0.

It is contemplated that when melamine, boron oxide and ammonium pentaborate tetrahydrate are the reaction components, particularly high yields are obtained from a reaction composition comprising from about 30 to about 40 weight percent, based on the total weight of the reaction composition, of melamine and from about 60 to about 70 weight percent, based on the total weight of the reaction composition, of a combination of boron oxide and ammonium pentaborate tetrahydrate, wherein the weight ratio of boron oxide to ammonium pentaborate tetrahydrate ranges from about 1:1 to about 1:2, preferably from about 1.0:1.2 to about 1.0:1.4. It is further contemplated that when dicyandiamide, boron oxide, and ammonium pentaborate tetrahydrate form the reaction composition, good nitride yields are obtained utilizing a reaction composition comprising from about 40 to about 50 weight percent, based on the total weight of the reaction composition, of dicyandiamide and from about 50 to about 60 weight percent, based on the total weight of the reaction composition, of a combination of boron oxide and ammonium pentaborate tetrahydrate, wherein the weight ratio of boron oxide to ammonium pentaborate tetrahydrate ranges from about 2:1 to about 3:1, preferably from about 2.3:1.0 to about 2.5:1.0.

It should be noted that while the specific composition ranges provided above generally result in relatively high product yields, acceptable nitride yields may also be obtained from compositions which fall outside of these preferred ranges (as an illustration thereof see Example 9). It is postulated that proportional variations in reaction compositions affect the amount and rate of intermediate by-product production (eg. ammonia, water, metaboric acid and the like) which in turn affect the mechanism by which the reaction proceeds. The relationship between proportional variations in the reaction composition and nitride yield vis a vis the production of intermediate by-products is not, however, fully understood.

The preferred process of this invention may be more particularly described as comprising the steps of:

(a) mixing boron oxide; a puffing agent selected from metaboric acid, orthoboric acid, pyroboric acid, ammonium pentaborate tetrahydrate, and mixtures thereof, most preferably boric acid or ammonium pentaborate tetrahydrate; and a nitrogen-containing nitride promoter, preferably melamine or dicyandiamide to form a reaction composition;

(b) introducing the reaction composition into a reaction zone maintained at temperature in a range of from about 700°C to about 1200°C under a non-oxidizing atmosphere, preferably under a nitrogenous atmosphere, most preferably under a nitrogen atmosphere.

(c) reacting the reaction composition in the reaction zone to produce amorphous boron nitride; and

(d) removing the amorphous boron nitride produced from the reaction zone.

The reaction zone may be maintained at a pressure of from about -13.79 kPa to about + 68.95 kPa (about -2 psi to about + 10 psi) and typically is maintained at a pressure from about -690 to about + 34.48 kPa (about -1 psi to about +5 psi). The time required to convert the boron-containing reactants to amorphous boron nitride is subject to wide variation depending in part upon the temperature of the reaction zone. In general, an inverse relationship exists between reaction times and temperatures, with reactions run at higher temperatures requiring shorter reaction times than reactions run at lower temperatures. Typically, reaction times vary between about 15 minutes and about 1 hour. Although temperature within the reaction zone is subject to variation, it is particularly desirable that the reaction be maintained at temperature of at least 850°C for a period of at least 15 minutes in order to ensure that all reaction generated gases and residual carbon impurities are removed from the reaction product.

Following nitride formation the product formed may be cooled to temperature of less than about 50°C, crushed to a particle size of less than about 25 mm, preferably about 10 mm, and heated to a second higher temperature of about 1300°C to about 2000°C, in a non-oxidizing atmosphere, preferably a nitrogenous atmosphere (e.g. ammonia or nitrogen) or, most preferably in a nitrogen atmosphere, to crystallize the amorphous boron nitride produced by the first heating. The resultant product may thereafter be washed, preferably with a solvent such as methanol or a 1% aqueous solution of nitric acid, to produce a fine, white, high purity, crystalline boron nitride powder.

The process of this invention may be carried out batch-wise or continuously. In continuous production processes the amorphous boron nitride produced following heating to a first elevated temperature, preferably between about 700°C and about 1200°C, is directly introduced into a second higher tempera-

4

ture zone of about 1300°C to about 2000°C; maintained in the said second higher temperature zone under a non-oxidizing atmosphere, preferably a nitrogenous atmosphere, most preferably a nitrogen atmosphere, for a period of time sufficient to ensure essentially complete nitridation, typically from about 45 minutes to about 2 hours; and then crushed and washed as discussed above to yield a high purity crystalline product.

Preferably, the process of this invention achieves a Conversion Efficiency of at least 40%, preferably at least 50% and most preferably at least 55%. For purposes of this invention Conversion Efficiency is defined as:

$$100 \times \frac{\text{(grams of washed, dried BN produced after nitriding at 1400°C)}}{\text{(grams of } B_2O_3 \text{ added as a reactant + grams of diffusing agent added as a reactant)}}$$

The following examples are provided for purposes of illustrating the process of this invention. The examples are not to be construed as limiting this invention in any manner. Examples 1 to 13 illustrate the variations in product yields and conversion efficiencies which result from the use of different reaction compositions. Examples 12 and 13 provide estimated product yields of an ammonium pentaborate tetrahydrate-containing reaction composition.

EXAMPLE 1

482 grams of melamine, 400 grams of boron oxide and 118 grams of orthoboric acid were blended together and spread onto a 12 inch x 12 inch x 2 inch (30.48cm x 30.48cm x 5.08cm) graphite pan coated with an oxidation resistant ceramic paint. The pan was placed on a continuous belt and introduced to a furnace where it was heated in a 1000°C first reaction zone for a period of 20 minutes. Heating was conducted under nitrogen gas at a pressure of 1 atmosphere (1.01 bars). Following this first heating the resultant product, an amorphous boron nitride cake, was cooled to about 50°C and weighed. The weight of the cake was recorded as 400 grams. The cake was then crushed to a particle size of about 13mm and heat treated at a second higher temperature of 1400°C in a nitrogen atmosphere at a pressure of 1 atmosphere (1.01 bars) for a period of 60 minutes. Following the second higher temperature heat treatment the particles were methanol washed and dried to produce 212 grams of finely divided boron nitride powder having an analytical composition of 53.9 weight percent N, 42.4 weight percent B, 2.75 weight percent O, and 0.11 weight percent C.

Examples 2-5

The procedure followed in Example 1 was repeated using the reaction compositions specified in Table I. The product yields of the finely divided boron nitride powder produced varied between 186 and 274 grams based upon 1000 grams of starting material.

Example 6

482 grams of melamine, 400 grams of boron oxide and 118 grams of orthoboric acid were blended together and spread onto a 12 inch x 12 inch x 2 inch (30.48cm x 30.48cm x 5.08cm) graphite pan coated with an oxidation resistant ceramic paint. The pan was placed on a continuous belt and introduced to a furnace where it was heated in a 1000°C first reaction zone for a period of 30 minutes and thereafter heated at a second higher temperature of 1400°C for a period of 3 hours to achieve complete nitridation. Heating was conducted under nitrogen gas at a pressure of 1 atmosphere (1.01 bars). Following the second heating, the resultant product, an amorphous boron nitride cake, was crushed to a particle size of 13mm, methanol washed and dried to produce 240 grams of finely divided boron nitride powder.

Examples 7-11

The procedure followed in Example 6 was repeated using the reaction compositions specified in Table I. The product yields of the finely divided boron nitride powder produced varied between 215 and 283 grams based upon 1000 grams of starting material.

Example 12

344 grams of melamine, 285 grams of boron oxide and 371 grams of ammonium pentaborate tetrahydrate are blended together and spread onto a 12 inch x 12 inch x 2 inch (30.48 cm x 30.48 cm x 5.08 cm) graphite pan coated with an oxidation resistant ceramic paint. The pan is placed on a continuous belt and introduced to a furnace where it is heated in a 1000°C first reaction zone for a period of 30 minutes and thereafter heated at a second higher temperature of 1400°C for a period of 3 hours to achieve complete nitridation. Heating is conducted under nitrogen gas at a pressure of 1 atmosphere (1.01 bars). Following the second heating the resultant product is crushed to a particle size of 13mm, methanol washed and dried. Based on these reactants the estimated yield of boron nitride is 372 grams.

Example 13

534 grams of dicyandiamide, 330 grams of boron oxide and 136 grams of ammonium pentaborate tetrahydrate and blended together and spread onto a 12 inch x 12 inch x 2 inch (30.48cm x 30.48cm x 5.08 cm) graphite pan coated with an oxidation resistant ceramic paint. The pan is placed on a continuous belt and introduced to a furnace where it is heated in a 1000°C temperature zone for a period of 30 minutes and thereafter heated at a second higher temperature of 1400°C for a period of 3 hours to achieve complete nitridation. Heating is conducted under nitrogen gas at a pressure of 1 atmosphere (1.01 bars). Following the second heating the resultant product is crushed to a particle size of 13mm, methanol washed and dried. Based on these reactants, the estimated yield of boron nitride is 341 grams.

Comparative Example 1

541 grams of orthoboric acid was blended with 459 grams of melamine, charged into a stainless steel pan and dried at 300°C for a period of 2 hours to form a dry cake. The cake was crushed to a particle size of about 10mm and reacted at a temperature of 1000°C in an ammonia atmosphere for a period of 10 minutes. Thereafter the reacted material was heated at 1400°C under nitrogen gas at a pressure of 1 atmosphere (1.01 bars) for a period of 1 hour, acid washed with a 1% aqueous solution of nitric acid at 70°C, crushed and dried to produce 154 grams of finely divided boron nitride powder having an analytical composition of 55.0 weight percent N, 43.2 weight percent B, 3.1 weight percent 0, and less than 0.1 weight percent C.

A comparison of the conversion efficiencies of Examples 1 to 6 and 9 to 11 with that of Comparative Example 1 illustrates that superior conversion efficiencies and product yields are obtainable by the processes of this invention wherein boron oxide is a reactant material.

Comparative Example 2

500 grams of boron oxide and 500 grams of melamine were blended together and spread onto a 12 inch x 12 inch x 2 inch (30.48cm x 30.48cm x 5.08cm) pan coated with an oxidation resistant ceramic paint. The pan was placed on continuous belt and introduced to a furnace where it was heated in a 1000°C first reaction zone for a period of 30 minutes. Heating was conducted under nitrogen gas at a pressure of 1 atmosphere (1.01 bars). The resultant product was a yellowish-black material covered by a hard, thick layer of glassy boron oxide. The product was unsuitable for further processing. Comparative Example 2 illustrates that in the absence of a puffing agent, it is not feasible to produce boron nitride from boron oxide and melamine reactants.

TABLE I

| Example | Melamine Reacted | Dicyandiamide Reacted | $B_2O_3$ Reacted | $H_3BO_3$ Reacted | BN[1] Produced | Conversion Efficiency |
|---|---|---|---|---|---|---|
| | (g) | (g) | (g) | (g) | (g) | (%) |
| 1 | 482 | - | 400 | 118 | 212 | 41 |
| 2 | 482 | - | 400 | 118 | 223 | 43 |
| 3 | 482 | - | 400 | 118 | 274 | 53 |
| 4 | 497 | - | 137 | 366 | 186 | 37 |
| 5 | - | 341 | 283 | 376 | 245 | 57 |
| 6 | 482 | - | 400 | 118 | 240 | 46 |
| 7 | 385 | - | 426 | 189 | 258 | 31 |
| 8 | 556 | - | 307 | 137 | 215 | 31 |
| 9 | 532 | - | 294 | 174 | 233 | 50 |
| 10 | - | 390 | 323 | 287 | 283 | 47 |
| 11 | - | 341 | 283 | 376 | 233 | 57 |
| $C_1$ | 459 | - | - | 541 | 154 | 28 |

[1] BN produced after product is nitrided at 1400°C washed and dried

## Claims

1. A process for the production of boron nitride which comprises heating a reaction composition comprising boron oxide, a puffing agent, and a nitrogen-containing nitride promoter under a non-oxidizing atmosphere and maintaining same at elevated temperature to form boron nitride, the puffing agent being selected from water, metaboric acid, orthoboric acid, pyroboric acid, ammonium pentaborate tetrahydrate and mixtures thereof.

2. A process according to claim 1, wherein the puffing agent is orthoboric acid or ammonium pentaborate tetrahydrate.

3. A process according to claim 1 or 2, wherein the nitrogen-containing promoter is an organic amide or an organic amine.

4. A process according to claim 3, wherein the nitrogen-containing promoter is melamine or dicyandiamide.

5. A process according to any of claims 1 to 4, wherein the reaction composition comprises from 30 to 55 weight percent of the nitrogen-containing nitride promoter and from 45 to 70 weight percent of a combination of boron oxide and puffing agent, wherein the weight ratio of boron oxide to puffing agent in the combination is from 4:1 to 1:3.

6. A process according to any of claims 1 to 4, wherein boron oxide, orthoboric acid and melamine are mixed to form a reaction composition which comprises from 45 to 50 weight percent, based on the weight of the reaction composition, of melamine and from 50 to 55 weight percent, based on the weight of the reaction composition, of a combination of boron oxide and orthoboric acid, wherein the weight ratio of boron oxide to orthoboric acid is from 3:1 to 4:1.

7. A process according to any of claims 1 to 4, wherein boron oxide, orthoboric acid and dicyandiamide are mixed to form a reaction composition which comprises from 35 to 40 weight percent, based on the weight of the reaction composition, of dicyandiamide and from 60 to 65 weight percent, based on the weight of the reaction composition, of a combination of boron oxide and orthoboric acid, wherein the weight ratio of boron oxide to boric acid is from 2:1 to 1:1.

8. A process according to any of claims 1 to 4, wherein boron oxide, ammonium pentaborate tetrahydrate and melamine are mixed to form a reaction composition which comprises from 30 to 40 weight percent,

EP 0 336 997 B1

based on the weight of the reaction composition, of melamine and from 60 to 70 weight percent, based on the weight of the reaction composition, of a combination of boron oxide and ammonium pentaborate tetrahydrate, wherein the weight ratio of boron oxide to ammonium pentaborate tetrahydrate is from 1:1 to 1:2.

9. A process according to any of claims 1 to 4, wherein boron oxide, ammonium pentaborate tetrahydrate and dicyandiamide are mixed to form a reaction composition which comprises from 40 to 50 weight percent, based on the weight of the reaction composition, of dicyandiamide and from 50 to 60 weight percent, based on the weight of the reaction composition, of a combination of boron oxide and ammonium pentaborate tetrahydrate, wherein the weight ratio of boron oxide to ammonium pentaborate tetrahydrate is from 2:1 to 3:1.

10. A process according to any of claims 1 to 9, wherein the reaction composition is heated to a temperature between 700°C and 1200°C.

11. A process according to any of claims 1 to 10, wherein the reaction composition is maintained at temperature of at least 850°C for a period of at least 15 minutes.

12. A process according to any of claims 1 to 11, wherein the boron nitride so formed is removed as amorphous boron nitride.

13. A process according to any of claims 1 to 12, wherein following heating to temperature between 700°C and 1200°C, the resultant product is heated at second higher temperature between 1300°C and 2000°C under a non-oxidizing atmosphere.

14. A process according to any of claims 1 to 12, wherein there are further steps of:
(a) cooling the amorphous boron nitride formed in the reaction zone to temperature less than 50°C;
(b) crushing the cooled amorphous boron nitride to a particle size of less than 25mm; and
(c) nitriding the crushed particles at second higher temperature of 1300 to 2000°C under a non-oxidising atmosphere to produce a crystalline product.

15. A process according to any of claims 1 to 14, wherein the non-oxidizing atmosphere is an atmosphere of ammonia or nitrogen.

**Revendications**

1. Procédé de production de nitrure de bore, qui consiste a chauffer une composition réactionnelle comprenant de l'oxyde de bore, un agent de gonflement et un activateur azoté de formation de nitrure sous une atmosphère non oxydante, et à maintenir celle composition à température élevée pour la formation de nitrure do bore, l'agent de gonflement étant choisi entre l'eau, l'acide métaborique, l'acide orthoborique, l'acide pyroborique, le pentaborate d'ammonium tétrahydraté et leurs mélanges.

2. Procédé suivant la revendication 1, dans lequel l'agent de gonflement est l'acide orthoborique ou le pentaborate d'ammonium tétrahydraté.

3. Procédé suivant la revendication 1 ou 2, dans lequel l'activateur contenant de l'azote est un amide organique ou une amine organique.

4. Procédé suivant la revendication 3, dans lequel l'activateur contenant de l'azote est la mélamine ou le dicyandiamide.

5. Procédé suivant l'une quelconque des revendications 1 à 4, dans lequel la composition réactionnelle comprend 30 à 55% en poids de l'activateur azoté de formation de nitrure et 43 à 70% en poids d'un mélange d'oxyde de bore et d'agent de gonfloment, le rapport pondéral de l'oxyde de bore à l'agent de gonflement dans le mélange étant compris dans l'intervalle de 4:1 à 1:3.

6. Procédé suivant l'une quelconque des revendications 1 à 4, dans lequel de l'oxyde de bore, de l'acide orthoborique et de la mélamine sont mélangés pour former une composition réactionnelle qui com-

8

prend 45 à 50% en poids, sur la base du poids de la composition réactionnelle, de mélamine et 50 à 55% en poids, sur la base du poids de la composition réactionnelle, d'un mélange d'oxyde de bore et d'acide orthoborique, le rapport pondéral de l'oxyde de bore à l'acide orthoborique étant compris dans l'intervalle de 3:1 à 4:1.

7. Procédé suivant l'une quelconque des revendicatione 1 à 4, dans lequel de l'oxyde de bure, de l'acide orthoborique et du dicyandiamide sont mélangés pour former une composition réactionnelle qui comprend 35 à 40% en poids, sur la base du poids de la composition réactionnelle, de dicyandiamide et 60 à 65% en poids, sur le base du poids de la composition réactionnelle, d'un mélange d'oxyde de bore et d'acide orthoborique, le rapport pondéral de l'oxyde de bore à l'acide borique étant compris dons l'intervalle de 2:1 à 1:1.

8. Procédé suivant l'une quelconque des revendications 1 à 4, dans lequel de l'oxyde de bore, du pentaborate d'ammonium tétrahydraté et de la mélamine sont mélangés pour former une composition réactionnelle qui comprend 30 à 40% en poids, sur la base du poids de la composition réactionnelle, de mélamine et 60 à 70% en poids, sur la base du poids de la composition réactionnelle, d'un mélange d'oxyde de bore et de pentaborate d'ammonium tétrahydraté, le rapport pondéral de l'oxyde de bore au pentaborate d'ammonium tétrahydraté étant compris dans l'intervalle de 1:1 à 1:2.

9. Procédé suivant l'une quelconque des revendications 1 à 4, dans lequel de l'oxyde de bore, du pentaborate d'ammonium tétrahydraté et du dicyandiamide sont mélangés pour former une composition réactionnelle qui comprend 40 à 50% en poids, sur la base du poids de la composition réactionnelle, de dicyandiamide et 50 à 60% en poids, sur le base du poids de la composition réactionnelle, d'un mélange d'oxyde de bore et de pentaborate d'ammonium tétrahydraté, le rapport pondéral de l'oxyde de bore au pentaborate d'ammonium tétrahydraté étant compris dans l'intervalle de 2:1 à 3:1.

10. Procédé suivant l'une quelconque des revendications 1 à 9, dans lequel le composition réactionnelle est chauffée à une température de 700°C à 1200°C.

11. Procédé suivant l'une quelconque des revendications 1 à 10, dans lequel la composition réactionnelle est maintenue à une température d'au moins 850°C pendant un tempe d'au moins 15 minutes.

12. Procédé suivant l'une quelconque des revendications 1 à 11, dans lequel le nitrure de bore ainsi formé est séparé sous forme de nitrure de bore amorphe.

13. Procédé suivant l'une quelconque des revendications 1 à 12, dans lequel, après chauffage à une température comprise dans l'intervalle de 700°C à 1200°C, le produit résultant est chauffé à une seconde température élevée comprise dans l'intervalle de 1300°C à 2000°C, sous atmosphère non oxydante.

14. Procédé suivant l'une quelconque des revendications 1 à 12, dons lequel sont mises en oeuvre les étapes supplémentaires consistant :
    (a) à refroidir le nitrure de bore amorphe formé dans la zone réactionnelle à une température inférieure à 50°C ;
    (b) à broyer le nitrure de bore amorphe refroidi à un diamètre de particules inférieur à 25 mm ; et
    (c) à provoquer la nitruration des particules broyées à une seconde température élevée comprise dans l'intervalle de 1300 à 2000°C sous une atmosphère non oxydante pour l'obtention d'un produit cristallin.

15. Procédé suivant l'une quelconque des revendications 1 à 14, dans lequel l'atmosphère non oxydante est une atmosphère d'ammoniac ou d'azote.

**Patentansprüche**

1. Verfahren zum Herstellen von Bornitrid, bei dem ein Reaktionsgemisch, das Boroxid, ein Blähmittel und einen stickstoffhaltigen Nitridpromotor aufweist, unter einer nichtoxidierenden Atmosphäre erhitzt und zur Bildung von Bornitrid auf erhöhter Temperatur gehalten wird, wobei das Blähmittel aus Wasser, Metaborsäure, Orthoborsäure, Pyroborsäure, Ammoniumpentaborattetrahydrat und Gemischen desselben ausgewählt wird.

2. Verfahren nach Anspruch 1, wobei das Blähmittel Orthoborsäure oder Ammoniumpentaborattetrahydrat ist.

3. Verfahren nach Anspruch 1 oder 2, wobei der stickstoffhaltige Promotor ein organisches Amid oder ein organisches Amin ist.

4. Verfahren nach Anspruch 3, wobei der stickstoffhaltige Promotor Melamin oder Dicyandiamid ist.

5. Verfahren nach einem der Ansprüche 1 bis 4, wobei das Reaktionsgemisch 30 bis 55 Gewichtsprozent des stickstoffhaltigen Nitridpromotors und 45 bis 70 Gewichtsprozent einer Kombination aus Boroxid und Blähmittel aufweist, wobei das Gewichtsverhältnis von Boroxid zu Blähmittel in dem Gemisch zwischen 4 : 1 und 1 : 3 liegt.

6. Verfahren nach einem der Ansprüche 1 bis 4, wobei Boroxid, Orthoborsäure und Melamin zur Bildung eines Reaktionsgemisches gemischt werden, das bezogen auf das Gewicht des Reaktionsgemisches, 45 bis 50 Gewichtsprozent Melamin und, bezogen auf das Gewicht des Reaktionsgemisches, 50 bis 55 Gewichtsprozent einer Kombination aus Boroxid und Orthoborsäure aufweist, wobei das Gewichtsverhältnisvon Boroxid zu Orthoborsäure zwischen 3 : 1 und 4 : 1 liegt.

7. Verfahren nach einem der Ansprüche 1 bis 4, wobei Boroxid, Orthoborsäure und Dicyandiamid zur Bildung eines Reaktionsgemisches gemischt werden, das, bezogen aufdas Gewicht des Reaktionsgemisches, 35 bis 40 Gewichtsprozent Dicyandiamid und, bezogen auf das Gewicht des Reaktionsgemisches, 60 bis 65 Gewichtsprozent einer Kombination aus Boroxid und Orthoborsäure aufweist, wobei das Gewichtsverhältnisvon Boroxid zu Borsäure zwischen 2 : 1 und 1 : 1 liegt.

8. Verfahren nach einem der Ansprüche 1 bis 4, wobei Boroxid, Amoniumpentaborattetrahydrat und Melamin zur Bildung eines Reaktionsgemisches gemischt werden, das, bezogen auf das Gewicht des Reaktionsgemisches, 30 bis 40 Gewichtsprozent Melamin und, bezogen auf das Gewicht des Reaktionsgemisches, 60 bis 70 Gewichtsprozent einer Kombination aus Boroxid und Amoniumpentaborattetrahydrat aufweist, wobei das Gewichtsverhältnis von Boroxid zu Amoniumpentaborattetrahydrat zwischen 1 : 1 und 1 : 2 liegt.

9. Verfahren nach einem der Ansprüche 1 bis 4, wobei Boroxid, Amoniumpentaborattetrahydrat und Dicyandiamid zur Bildung eines Reaktionsgemisches gemischt werden, das bezogen auf das Gewicht des Reaktionsgemisches, 40 bis 50 Gewichtsprozent Dicyandiamid und, bezogen auf das Gewicht des Reaktionsgemisches, 50 bis 60 Gewichtsprozent einer Kombination aus Boroxid und Amoniumpentaborattetrahydrat aufweist, wobei das Gewichtsverhältnis von Boroxid zu Amoniumpentaborattetrahydrat zwischen 2 : 1 und 3 : 1 liegt.

10. Verfahren nach einem der Ansprüche 1 bis 9, wobei das Reaktionsgemisch auf eine Temperatur zwischen 700°C und 1200°C erhitzt wird.

11. Verfahren nach einem der Ansprüche 1 bis 10, wobei das Reaktionsgemisch auf einer Temperatur von mindenstens 850°C für eine Zeitspanne von mindestens 15 Minuten gehalten wird.

12. Verfahren nach einem der Ansprüche 1 bis 11, wobei das so gebildete Bornitrid als amorphes Bornitrid abgeführt wird.

13. Verfahren nach einem der Ansprüche 1 bis 12, wobei im Anschluß an ein Erhitzen auf eine Temperatur zwischen 700°C und 1200°C das erhaltene Produkt auf eine zweite höhere Temperatur zwischen 1300°C und 2000°C unter einer nicht oxidierenden Atmosphäre erhitzt wird.

14. Verfahren nach einem der Ansprüche 1 bis 12, wobei die folgenden weiteren Verfahrensschritte vorgesehen sind:
    (a) Abkühlen des in der Reaktionszone gebildeten amorphen Bornitrids auf eine Temperatur von weniger als 50°C;

(b) Zerkleinern des abgekühlten amorphen Bornitrids auf eine Teilchengröße von weniger als 25 mm; und

(c) Nitrieren der zerkleinerten Teilchen bei einer zweiten höheren Temperatur von 1300 bis 2000°C unter einer nichtoxidierenden Atmosphäre zum Erzeugen eines kristallinen Produkts.

15. Verfahren nach einem der Ansprüche 1 bis 14, wobei die nichtoxidierende Atmosphäre eine Atmosphäre aus Ammoniak oder Stickstoff ist.